# FASCICULE DE BREVET EUROPEEN

(11) **EP 2 170 544 B1**
(45) Date de publication et mention de la délivrance du brevet: **12.04.2017**
(21) Numéro de dépôt: 08757260.8
(22) Date de dépôt: 12.06.2008
(51) Int. Cl.: B23B 3/26, B23Q 7/05

(54) **MACHINE DE DECOLLETAGE**
DREHAUTOMAT
TURNING MACHINE

(30) Priorité: 26.06.2007 CH 10202007
(43) Date de publication de la demande: 07.04.2010
(73) Titulaire: Esco S.A., 2206 Les Geneveys-sur-Coffrane (CH)
(72) Inventeur: FAVRE, Jean-Marc, CH-2520 La Neuveville (CH); MEIER, Peter, CH-2013 Colombier (CH)
(74) Mandataire: Nithardt, Roland
(86) Numéro de dépôt international: PCT/CH2008/000267
(87) Numéro de publication internationale: WO 2009/000094

(56) Documents cités:
- EP-A- 0 278 898
- CH-A- 327 038
- CH-A5- 696 741
- DE-A1- 3 000 055
- DE-A1- 19 949 065
- FR-A- 1 314 486
- FR-A- 1 578 355
- GB-A- 916 433
- JP-A- 51 052 588
- JP-A- 59 073 201
- US-A- 2 809 697
- US-A- 4 626 149
- DATABASE WPI Week 200673 Thomson Scientific, London, GB; AN 2006-696954 XP002473111 & CN 1 799 735 A (SHI C) 12 juillet 2006 (2006-07-12)

## Description

### Domaine technique

La présente invention concerne une machine de décolletage selon le préambule de la revendication 1, du type à mandrin rotatif pour décolleter des pièces de mécanique dans une matière première constituée d'un fil métallique stationnaire, cette machine comportant un bâti sur lequel est monté un mandrin rotatif, des moyens pour alimenter ce mandrin en ladite matière première et des moyens pour commander la plongée des outils de décolletage et de coupe du mandrin rotatif. Une telle machine est connue du document DE 199 49 065 A1.

### Technique antérieure

Dans ce type de machines, le mandrin est déterminant pour définir la qualité du travail réalisé par la machine. Les matériaux usinés exigent une vitesse de rotation très élevée des mandrins rotatifs afin d'améliorer à la fois la qualité de l'usinage et la productivité de la machine.

On connaît, notamment par le brevet européen publié sous le N° EP 0 278 898 A1 un mandrin rotatif pour une machine de décolletage qui est conçue pour effectuer des travaux de décolletage à des vitesses élevées, de l'ordre de 12'000 t/m. Ce type de mandrin est de construction complexe et comporte de multiples composants. Il comprend en particulier un ressort qui prend appui sur une bague destinée à assurer par l'intermédiaire d'une vis, le recul de la douille de commande de la plongée des burins. Cette construction complique la machine et réduit la précision et la vitesse de son fonctionnement en raison des frottements, des jeux de fonctionnement entre les pièces, et de la fatigue du ressort avec le temps. De plus, l'avance de cette douille tournante est effectuée par deux tirants par l'intermédiaire d'un roulement à appui axial de fabrication spécifique, ce qui renchérit le prix de construction de la machine. De surcroît l'inconvénient principal de cette réalisation est dû au fait que l'on ne maîtrise que le mouvement d'avance forcée par le déplacement des cames et que le recul n'est assuré que par le ressort logé au centre du mandrin. Ce mode de fonctionnement est incompatible avec une commande numérique. En effet, avec un mode de fonctionnement en commande numérique, le déplacement de recul ne peut pas être tributaire de la poussée d'un ressort dont on connaît le côté aléatoire lié à la fatigue, l'absence de précision et la lenteur de l'action. En mode de fonctionnement en commande numérique, seul un déplacement commandé sans jeu est acceptable dans les deux sens de déplacement, à savoir pour l'avance et pour le recul. De ce fait, même si le mandrin du brevet mentionné ci-dessus permet de travailler à des vitesses relativement élevées, il reste totalement incompatible avec un fonctionnement en commande numérique de la machine de décolletage sur laquelle il est monté et sa construction ne permet pas une transformation simple susceptible de l'adapter à un tel mode de fonctionnement.

On connaît par ailleurs deux autres publications illustrant l'art antérieur, à savoir le brevet français publié sous le N° FR 1 578 355 et la publication japonaise JP 51 052 588. Le brevet français décrit une machine de décolletage de barres ou de tuyaux de construction particulière et la publication japonaise décrit la chaîne cinématique d'une machine d décolletage traditionnelle.

Aucune de ces deux réalisations ne suggère une solution adaptée aux fonctionnalités de la machine de l'invention et en particulier un fonctionnement du mandrin rotatif portant les burins d'usinage sur une machine à commande numérique.

### Exposé de l'invention

La présente invention se propose de pallier les inconvénients des systèmes connus et de répondre à la nouvelle demande du marché en réalisant une machine de décolletage selon la revendication 1, équipée d'un mandrin rotatif dont la construction est simplifiée mais qui est rapide, précise, facile à commander et dont la maintenance est simplifiée par rapport aux machines traditionnelles.

Ce but est atteint par la machine selon l'invention telle que définie en préambule et dans laquelle lesdits moyens pour alimenter le mandrin en matière première comportent un bloc d'alimentation équipé d'un premier actuateur à commande numérique couplé à un dispositif pour déplacer linéairement la matière première au cours d'un cycle de décolletage, et dans laquelle lesdits moyens pour commander la plongée des outils de décolletage et de coupe du mandrin rotatif comportent un bloc de commande équipé d'un second actuateur à commande numérique pourvu d'organes pour piloter le déplacement desdits outils activement dans un sens et dans le sens opposé pendant l'opération de décolletage de la matière première.

Lesdits organes pour piloter le déplacement desdits outils comportent deux tiges coulissantes linéairement couplées audit second actuateur, lesdites tiges coulissantes étant agencées pour actionner les outils du mandrin et régler leur position en vue du décolletage de la matière première.

Lesdites tiges coulissantes sont solidaires respectivement d'une douille non rotative logée dans un alésage du corps tournant du mandrin, cette douille étant agencée pour agir sur des surfaces directrices hélicoïdales qui commandent la plongée des outils.

Ces surfaces directrices hélicoïdales sont solidaires de pièces de section tronconique couplées aux axes pivotants respectifs des outils.

De façon avantageuse, ledit dispositif pour déplacer linéairement la matière première comporte deux disques d'entraînement, dont l'un au moins est entraîné par ledit premier actuateur à commande numérique, ces disques étant agencés pour serrer et entraîner ladite matière première entre leur surface périphérique. D'une manière préférentielle, il comporte en outre un levier et des moyens pour régler la force d'appui exercée par la surface périphérique desdits disques sur la matière première.

De façon avantageuse, ledit levier est solidaire d'un plot rotatif et évidé, monté sur un arbre central solidaire d'un manchon dans lequel est logé l'axe d'un desdits disques, ledit manchon étant agencé pour se déplacer parallèlement à lui-même en fonction de la position angulaire dudit levier.

Ledit plot rotatif et évidé contient de préférence un ressort, coaxial audit arbre central, réglable en compression et déterminant la force d'appui des disques sur la matière.

De façon préférentielle, seul l'un desdits disques est entraîné par ledit premier actuateur, l'autre disque étant entraîné par un autre arbre lui-même entraîné par friction sur l'un des organes agissant sur le premier disque.

Le bloc d'alimentation et le bloc de commande sont de préférence disposés côte à côte, selon des axes sensiblement parallèles perpendiculaires à l'axe du mandrin.

### Description sommaire des dessins

La présente invention et ses avantages seront mieux comprise à la lecture de la description détaillée d'une forme de réalisation préférée de la machine de l'invention, en référence aux dessins annexés, donnés à titre indicatif et non limitatif, dans lesquels:
la figure 1 est une vue générale en perspective de la machine de décolletage selon l'invention,
la figure 2 est une vue d'ensemble en perspective représentant une partie de la machine de décolletage de la figure 1, et en particulier les moyens de commande de l'avance de la matière et de la plongée des outils du mandrin de décolletage,
la figure 2A représente une vue en élévation de partie de la machine illustrée par la figure 2,
la figure 2B est une vue en coupe selon la ligne A-A de la figure 2A,
la figure 2C est une vue en coupe selon la ligne B-B de la figure 2A,
la figure 3 est une vue en perspective du mandrin de la machine selon l'invention,
la figure 3A est une vue en élévation du mandrin de la machine représenté par la figure 3,
la figure 3B est une vue en coupe du mandrin de la machine selon la ligne A-A de la figure 3A, et
la figure 4 est une vue en coupe représentant essentiellement le bloc d'alimentation en matière première et le mandrin de décolletage de la machine de l'invention.

### Meilleure manière de réaliser l'invention

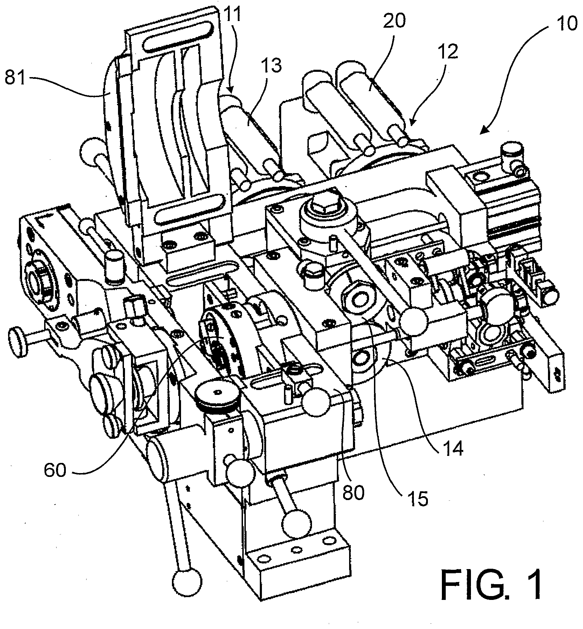

La figure 1 représente la machine de décolletage 10 selon l'invention et illustre la position relative de ses différents composants. Cette machine comporte un bloc d'alimentation 11 ayant pour fonction l'approvisionnement en matière première, en l'occurrence du fil métallique provenant d'une torche (non représentée), et un bloc de commande 12 ayant pour fonction la gestion des outils de décolletage et de coupe de ce fil métallique. Le bloc d'alimentation 11 et le bloc de commande 12 sont disposés parallèlement selon des directions d'axes sensiblement perpendiculaires à l'axe d'un mandrin 60 qui est logé dans un bâti 80 recouvert d'un capot relevable 81. Le fil métallique à usiner est acheminé par deux disques d'entraînement 14 et 15 agencés pour assurer l'approvisionnement en matière première des outils de décolletage et en particulier du mandrin d'usinage et de coupe 60. La machine 10 est également pourvue de deux actuateurs 13 et 20 dont la fonction sera précisée ci-dessous

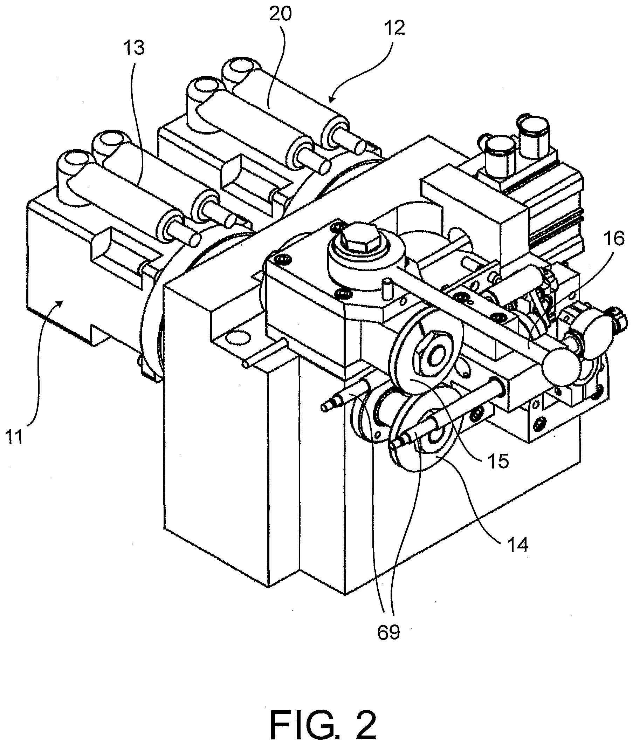

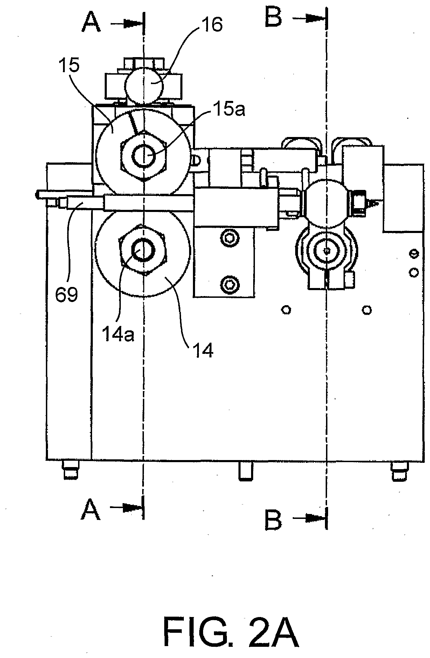

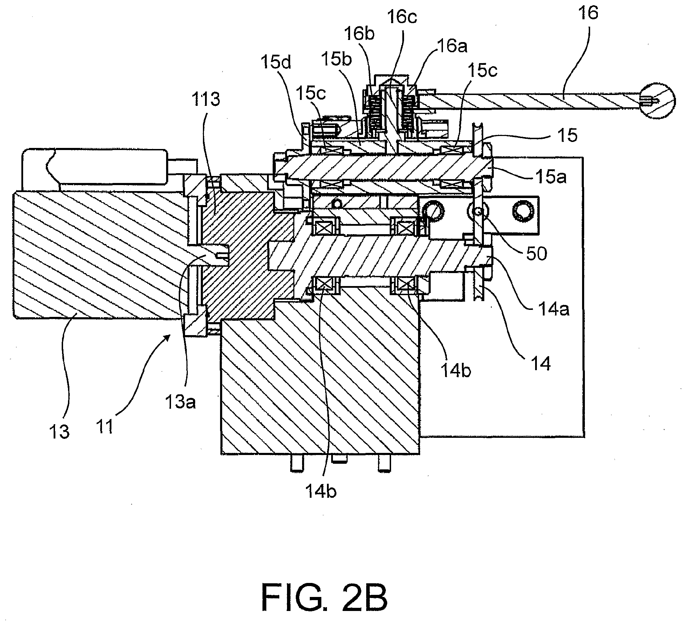

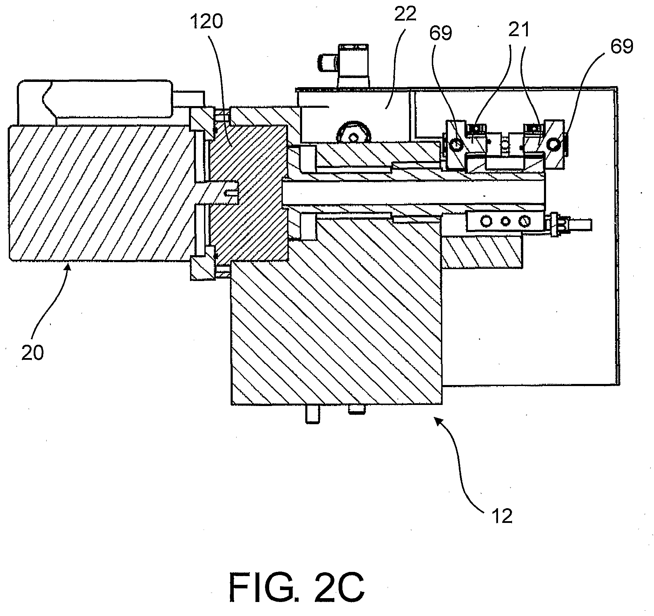

En référence aux figures 2, 2A, 2B et 2C le bloc d'alimentation 11 comporte un des actuateurs, à savoir le premier actuateur 13 qui entraîne au moins l'un des deux disques 14 ou 15. Ce premier actuateur 13 qui, dans l'exemple décrit est un moteur électrique piloté numériquement, peut également être un actuateur rotatif du type moteur hydraulique ou pneumatique associé à un levier pour la transformation du mouvement en déplacement linéaire ou tout autre actuateur linéaire tel qu'un axe linéaire, un axe-vérin hydraulique ou pneumatique ou piézo-électrique directement couplé à une douille de commande.

Le fil métallique 50 de matière première à usiner est pincé entre les deux disques 14 et 15 qui comportent une gorge semi-circulaire périphérique pour le pincer avec une force d'appui réglée et appliquée par l'intermédiaire d'un levier 16. Dans l'exemple représenté en particulier par la figure 2B, l'axe 14a du disque 14 est couplé directement à l'arbre de sortie 13a du moteur formant l'actuateur 13 par l'intermédiaire d'un réducteur 113 afin d'augmenter la précision du mouvement du fil 50.

Comme le montre également cette figure, le levier 16 est solidaire d'un plot 16a rotatif et évidé, dans lequel est logé un ressort de rappel 16b coaxial, qui est monté sur un arbre central 16c. L'arbre central 16c est solidaire d'un manchon 15b contenant l'axe 15a qui porte le disque 15 à son extrémité frontale et deux roulements 15c. Par ailleurs, le bloc d'alimentation 11 porte l'axe 14a à l'extrémité duquel est monté le disque 14. Les deux axes 14a et 15a sont parallèles entre eux et les deux disques 14 et 15 sont disposés sensiblement dans le même plan, avec un espace périphérique suffisant pour pincer le fil métallique 50 de matière première. L'axe 14a est monté sur deux roulements 14b et il est entraîné en rotation par le moteur formant l'actuateur 13.

Un pivotement angulaire du levier 16 autour de l'arbre central 16c a pour effet de déplacer l'axe 15a parallèlement à lui-même en vue de rapprocher ou d'éloigner les deux disques 14 et 15 et d'augmenter ou de diminuer le pincement du fil métallique de matière première 50 à usiner. Dans la réalisation décrite, seul le disque 14 est entraîné par un moteur, le disque 15 étant entraîné par friction par l'intermédiaire de l'arbre 15a et d'un disque 15d, qui est également entraîné par friction par l'arbre 14a couplé au moteur formant l'actuateur 13. Toutefois, les deux disques pourraient être motorisés directement. Le moteur de l'actuateur 13, appelé le premier moteur, est avantageusement un moteur synchrone, ce qui permet d'avoir une grande flexibilité et une grande précision.

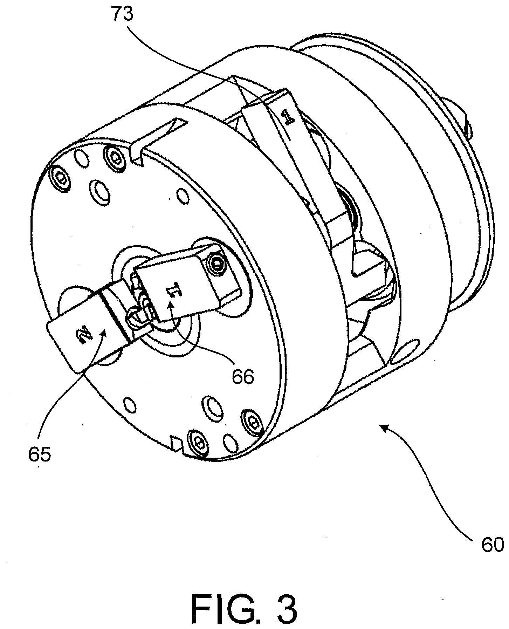

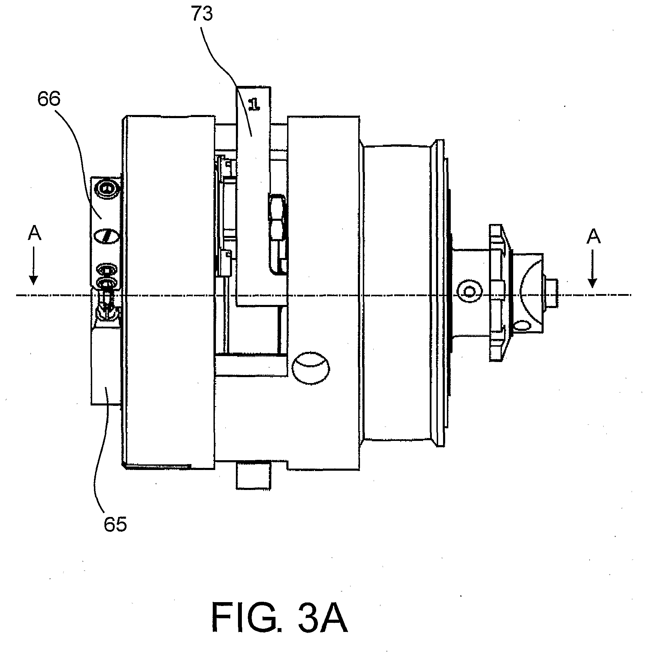

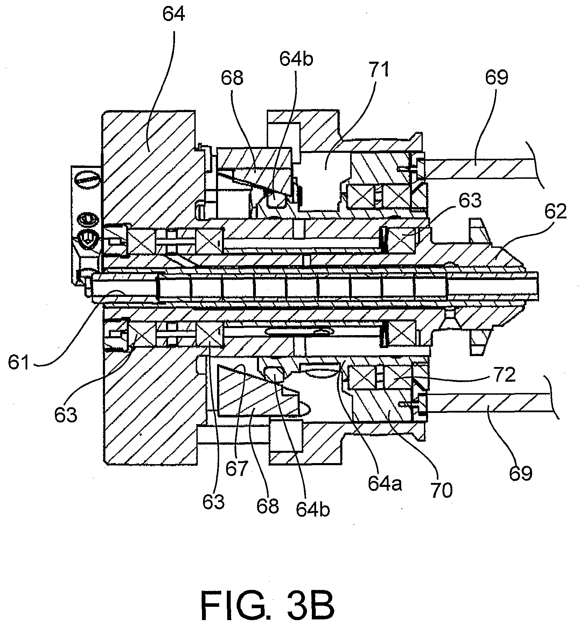

En référence à la figure 2C, le bloc de commande 12 comporte le second actuateur 20, tel qu'un moteur électrique, appelé le second moteur, qui assure la commande de la plongée des outils du mandrin de décolletage (représenté plus en détail par les figures 3, 3A et 3B). Ce deuxième actuateur 20 qui, dans l'exemple décrit est un moteur électrique piloté numériquement peut, comme l'actuateur 13, être également un actuateur rotatif du type moteur hydraulique ou pneumatique associé à un levier pour la transformation du mouvement en déplacement linéaire ou tout autre actuateur linéaire tel qu'un axe linéaire, un axe-vérin hydraulique ou pneumatique ou piézo-électrique directement couplé à une douille de commande. Le bloc de commande 12 comporte un réducteur 120, monté à la sortie du moteur formant l'actuateur 20, qui est couplé par l'intermédiaire d'un levier et d'éléments-rotule 21 sans jeu à des tiges coulissantes 69 du mandrin dont le rôle sera décrit ci-dessous en référence aux figures 3, 3A et 3B. Il comporte en outre un piston de serrage d'une pince 22, qui ne fait pas partie de l'invention et qui a pour fonction de serrer la pièce usinée lors de la coupe à la fin de l'opération de décolletage.

Le mandrin de décolletage 60, illustré par les figures 3, 3A, 3B, et plus en détail par la figure 3B, comprend un canon central 61 dans lequel est guidé le fil métallique à usiner. Ce canon central 61 est logé à l'intérieur d'une pièce-mandrin 62 qui est montée par l'intermédiaire de trois roulements 63 coaxialement à l'intérieur du corps tournant 64 du mandrin 60. Sur sa face frontale, le mandrin 60 est pourvu de deux porte-outils pour deux outils 65 et 66 tels que des burins et/ou des outils de moletage, opposés qui sont montés pivotants respectivement sur deux axes qui commandent leur plongée vers l'extrémité du fil métallique à usiner. La plongée des outils 65, 66 s'effectue par l'intermédiaire d'une surface directrice hélicoïdale 67 de pièces 68, de section tronconique, couplées à l'axe de pivotement respectif des outils 65 et 66. La plongée de ces outils s'effectue en fonction du déplacement linéaire, parallèle à l'axe de rotation du mandrin 60, d'une douille non rotative 70, logée dans un alésage 71 du corps tournant 64 du mandrin 60, dans laquelle sont engagées respectivement les deux tiges coulissantes 69. En d'autres termes, la position linéaire des tiges coulissantes 69 détermine la position des outils 65, 66 par rapport à la matière première à décolleter. Le déplacement linéaire de ces tiges coulissantes engendre un déplacement pivotant des outils. Une douille intermédiaire 64a, solidaire du corps tournant 64, est pourvue d'un anneau en métal dur 64b agencé pour entrer en contact avec la surface directrice hélicoïdale 67 des pièces tronconiques 68 liées à l'axe de pivotement des outils. Des roulements 72 sont interposés entre cette douille intermédiaire 64a et la douille non rotative 70 liée aux tiges coulissantes 69.

Le mandrin 60, respectivement chaque porte-outil, est en outre équipé d'au moins une masselotte 73 qui assure l'appui de la surface directrice hélicoïdale 67 par la force centrifuge développée au cours de la rotation du mandrin, sur l'anneau 64b de la douille 64a. La particularité de la construction de ce mandrin 60 réside notamment dans le fait que les tiges coulissantes 69 effectuent des déplacements forcés dans les deux sens opposés de la douille non rotative 70, ce qui permet d'éviter les ressorts de rappel présents sur les mandrins de l'art antérieur, et de supprimer le jeu ou la limite d'accélération possible à l'inversion de sens due précisément à ces ressorts de rappel. Les tiges coulissantes 69 qui sont aussi des tiges de recul sont commandées par un moteur à commande numérique ou un actionneur quelconque linéaire d'extrême précision. De ce fait, cette machine a notamment une capacité de travail élevée, une grande précision et une vitesse de fonctionnement très grande.

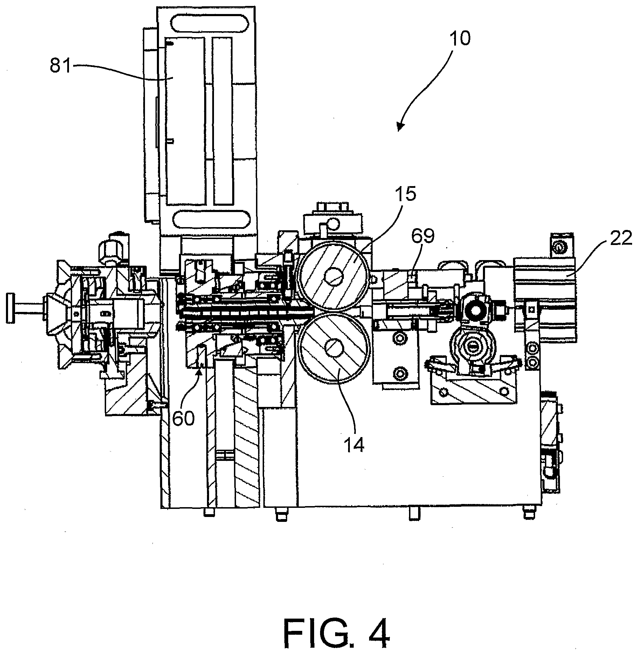

La figure 4 est une vue en coupe de la machine 10 selon un plan vertical parallèle à l'axe longitudinal du fil métallique 50 et illustre plus en détail le positionnement du mandrin 60 par rapport au bloc d'alimentation 11.

L'agencement de la machine selon l'invention permet d'opérer à grande vitesse, de manière très précise et la souplesse d'utilisation est en outre obtenue grâce à la commande numérique des moteurs d'entraînement et la commande directe dans les deux sens de la plongée des outils.

## Revendications

1. Machine de décolletage (10) du type à mandrin rotatif pour décolleter des pièces de mécanique dans une matière première constituée d'un fil métallique stationnaire, cette machine comportant un bâti sur lequel est monté un mandrin rotatif, des moyens pour alimenter ce mandrin en ladite matière première et des moyens pour commander la plongée des outils de décolletage et de coupe du mandrin rotatif, lesdits moyens pour alimenter le mandrin (60) en matière première (50) comportant un bloc d'alimentation (11) équipé d'un premier actuateur (13) à commande numérique couplé à un dispositif pour déplacer linéairement la matière première au cours d'un cycle de décolletage, et lesdits moyens pour commander la plongée des outils de décolletage et de coupe du mandrin rotatif (60) comportant un bloc de commande (12) équipé d'un second actuateur (20) à commande numérique pourvu d'organes pour piloter le déplacement desdits outils (65, 66) activement dans un sens et dans le sens opposé pendant l'opération de décolletage de la matière première, lesdits organes pour piloter le déplacement desdits outils (65, 66) comportant deux tiges coulissantes (69) linéairement couplées audit second actuateur (20) et agencées pour actionner les outils du mandrin (60) et régler leur position en vue du décolletage de la matière première, **caractérisée en ce que** lesdites tiges coulissantes (69) sont solidaires respectivement d'une douille (70) non rotative logée dans un alésage (71) du corps tournant (64) du mandrin (60), cette douille (70) étant agencée pour agir sur des surfaces directrices hélicoïdales (67) qui commandent la plongée des outils (65, 66), et **en ce que** lesdites surfaces directrices hélicoïdales (67) sont solidaires de pièces de section tronconiques (68) couplées aux axes pivotants respectifs des outils (65, 66).

2. Machine selon la revendication 1, **caractérisée en ce que** ledit dispositif pour déplacer linéairement la matière première comporte deux disques d'entraînement (14, 15), dont l'un au moins est entraîné par ledit premier actuateur (13) à commande numérique, ces disques étant agencés pour serrer et entraîner ladite matière première (50) entre leur surface périphérique.

3. Machine selon la revendication 2, **caractérisée en ce que** ledit dispositif pour déplacer linéairement la matière première comporte en outre un levier (16) et des moyens pour régler la force d'appui exercée par la surface périphérique desdits disques (14,15) sur ladite matière première.

4. Machine selon la revendication 3, **caractérisée en ce que** ledit levier (16) est solidaire d'un plot rotatif et évidé (16a) monté sur un arbre central (16c) solidaire d'un manchon (15b) dans lequel est logé l'axe d'un desdits disques (14, 15), ledit manchon (15b) étant agencé pour se déplacer parallèlement à lui-même en fonction de la position angulaire du levier (16).

5. Machine selon la revendication 4, **caractérisée en ce que** ledit plot rotatif et évidé (16a) contient un ressort (16b) coaxial audit arbre central (16c), réglable en compression déterminant la force d'appui des disques sur la matière.

6. Machine selon la revendication 2, **caractérisée en ce que** le disque d'entraînement (14) est entraîné par ledit premier actuateur (13) à commande numérique, l'autre disque d'entraînement (15) étant monté sur un arbre entraîné par friction sur l'un des organes agissant sur ledit disque (14).

7. Machine selon la revendication 1, **caractérisée en ce que** le bloc d'alimentation (11) et le bloc de commande (12) sont disposés côte à côte, selon des axes sensiblement parallèles perpendiculaire à l'axe du mandrin (60).

## Patentansprüche

1. Drehautomat (10) von der Art mit drehbarem Dorn zum Abstechen von Werkstücken aus einem Werkstoff, der aus einem feststehenden Metalldraht besteht, wobei dieser Automat ein Gestell, auf dem ein drehbarer Dorn montiert ist, Mittel, um diesen Dorn mit dem Werkstoff zu versorgen, und Mittel, um die Einstechbewegung der Abstech- und Schneidwerkzeuge des drehbaren Dorns zu steuern, umfasst, wobei die Mittel, um den Dorn (60) mit Werkstoff (50) zu versorgen, ein Netzgerät (11) umfassen, das mit einem ersten numerisch gesteuerten Stellglied (13) ausgestattet ist, das mit einer Vorrichtung zum linearen Bewegen des Werkstoffs im Verlauf eines Abstecharbeitszyklus gekoppelt ist, und wobei die Mittel zum Steuern der Einstechbewegung der Abstech- und Schneidwerkzeuge des drehbaren Dorns (60) ein Steuergerät (12) umfassen, das mit einem zweiten numerisch gesteuerten Stellglied (20) ausgestattet ist, das mit Elementen zum aktiven Ansteuern der Bewegung der Werkzeuge (65, 66) in einer Richtung und in einer entgegengesetzten Richtung während des Arbeitsgangs des Abstechens des Werkstoffs versehen ist, wobei die Elemente zum Ansteuern der Bewegung der Werkzeuge (65, 66) zwei Gleitstangen (69) umfassen, die linear mit dem zweiten Stellglied (20) gekoppelt sind und angeordnet sind, um die Werkzeuge des Dorns (60) zu betätigen und ihre Position zum Abstechen des Werkstoffs einzustellen, **dadurch gekennzeichnet, dass** die Gleitstangen (69) jeweils mit einer nicht drehbaren Hülse (70) fest verbunden sind, die in einer Bohrung (71) des Drehkörpers (64) des Dorns (60) aufgenommen ist, wobei diese Hülse (70) angeordnet ist, um auf die schraubenförmigen Leitflächen (67) einzuwirken, welche die Einstechbewegung der Werkzeuge (65, 66) steuern, und dass die schraubenförmigen Leitflächen (67) mit im Querschnitt kegelstumpfförmigen Teilen (68) fest verbunden sind, die mit den jeweiligen Schwenkachsen der Werkzeuge (65, 66) gekoppelt sind.

2. Automat nach Anspruch 1, **dadurch gekennzeichnet, dass** die Vorrichtung zum linearen Bewegen des Werkstoffs zwei Antriebsscheiben (14, 15) umfasst, von denen mindestens eine von dem ersten numerisch gesteuerten Stellglied (13) angetrieben wird, wobei diese Scheiben angeordnet sind, um den Werkstoff (50) zwischen ihren Peripherieflächen einzuklemmen und mitzunehmen.

3. Automat nach Anspruch 2, **dadurch gekennzeichnet, dass** die Vorrichtung zum linearen Bewegen des Werkstoffs ferner einen Hebel (16) und Mittel zum Einstellen der Anpresskraft, die von der Peripheriefläche der Scheiben (14, 15) auf den Werkstoff ausgeübt wird, umfasst.

4. Automat nach Anspruch 3, **dadurch gekennzeichnet, dass** der Hebel (16) mit einem drehbaren und ausgehöhlten Stift (16a) fest verbunden ist, der an einer zentralen Welle (16c) montiert ist, die mit einer Muffe (15b) fest verbunden ist, in der die Achse einer der Scheiben (14, 15) aufgenommen ist, wobei die Muffe (15b) angeordnet ist, um sich je nach der Winkelposition des Hebels (16) zu sich selber parallel zu bewegen.

5. Automat nach Anspruch 4, **dadurch gekennzeichnet, dass** der drehbare und ausgehöhlte Stift (16a) eine Feder (16b) enthält, die zu der zentralen Welle (16c) koaxial ist und kompressionsmäßig einstellbar ist, wodurch die Anpresskraft der Scheiben auf den Werkstoff bestimmt wird.

6. Automat nach Anspruch 2, **dadurch gekennzeichnet, dass** die Antriebsscheibe (14) von dem ersten numerisch gesteuerten Stellglied (13) angetrieben wird, wobei die andere Antriebsscheibe (15) an einer Welle montiert ist, die auf einem der Elemente, die auf die Scheibe (14) einwirken, reibschlüssig mitgenommen wird.

7. Automat nach Anspruch 1, **dadurch gekennzeichnet, dass** das Netzgerät (11) und das Steuergerät (12) entlang im Wesentlichen parallelen Achsen, die zur Achse des Dorns (60) rechtwinklig sind, nebeneinander angeordnet sind.

## Claims

1. A cutting machine (10) of the rotary mandrel type for cutting mechanical parts from a raw material constituted of stationary metal wire, said machine comprising a frame on which is mounted a rotary mandrel, means for feeding said mandrel with said raw material and means for controlling the infeed of the cutting and shearing tools of the rotary mandrel, said means of supplying the mandrel (60) with raw materials (50) comprising a power supply unit (11) equipped with a first digitally-controlled actuator (13) coupled to a device for the linear displacement of the raw material during a cutting cycle, and said means for controlling the infeed of the cutting and shearing tools of the rotary mandrel (60) comprising a control unit (12) equipped with a second digitally-controlled actuator (20) fitted with components to actively steer the movement of the said tools (65, 66) in one direction and in the opposite direction during the operation to cut the raw material, said components to steer the movement of the said tools (65, 66) comprising two sliding rods (69) linearly coupled to the said second actuator (20) and arranged so as to operate the tools of the mandrel (60) and to adjust their relative position or for the cutting of the raw material, **characterised in that** said sliding rods (69) are respectively attached to a non-rotary socket (70) housed in a bearing (71) of the turning body (64) of the mandrel (60), said socket (70) being arranged so as to act on helical directing surfaces (67) that control the infeed of the tools (65, 66), and **in that** said helical directing surfaces (67) are attached to parts with a truncated conical section (68) coupled to the corresponding pivoting axes of the tools (65, 66).

2. A machine according to claim 1, **characterised in that** the said device for the linear movement of the raw material comprises two drive disks (14, 15), at least one of which is operated by the said first digitally-controlled actuator (13), said disks being arranged so as to grip and pull the said raw material (50) between their peripheral surfaces.

3. A machine according to claim 2, **characterised in that** the said device for the linear movement of the raw material also includes a lever (16) and means for adjusting the bearing force exerted by the peripheral surface of the said disks (14,15) on the said raw material.

4. A machine according to claim 3, **characterised in that** the said lever (16) is attached to a hollow rotary joint (16a) mounted on a central shaft (16c) attached to a flange (15b) in which the axle of one of the said disks (14, 15) is housed, said flange (15b) being arranged so as to move parallel to itself depending on the angular position of the lever (16).

5. A machine according to claim 4, **characterised in that** the said hollow rotary joint (16a) contains a spring (16b) coaxial with the said central shaft (16c), adjustable in compression determining the bearing force of the disks on the material.

6. A machine according to claim 2, **characterised in that** the drive disk (14) is driven by the said first digitally-controlled actuator (13), the other drive disk (15) being mounted on a shaft driven through friction on one of the components acting on the said disk (14).

7. A machine according to claim 1, **characterised in that** the power supply unit (11) and the control unit (12) are arranged side by side, along substantially parallel axes perpendicular to the axis of the mandrel (60).
